# EUROPEAN PATENT APPLICATION

(11) **EP 2 043 325 A1**
(43) Date of publication of application: **01.04.2009**
(21) Application number: 07381067.3
(22) Date of filing: 28.09.2007
(51) Int. Cl.: H04L 29/06

(54) **Unified signaling for different telecommunication services**

(71) Applicant: Alcatel Lucent, S.A., 28045 Madrid (ES)
(72) Inventor: Poza Jimenez, Manuel, 28045, Madrid (ES); Garrido Torres, Pedro Luis, 28045, Madrid (ES)
(74) Representative: Elzaburu Marquez, Alberto

(57) **Abstract**

The invention relates to a process for managing and providing different services in a packet telecommunications network (9), comprising the step of using signaling or control messages in which memory areas identified as memory ports or terminations are adapted to be treated as subscriber ports (6-1, 6-2).

## Description

### OBJECT OF THE INVENTION

The present invention generally relates to a process for providing and configuring different services existing in packet telecommunications networks, based on the use of basic call signaling.

### STATE OF THE ART

In telecommunications networks, establishing communications involves the exchange of signaling messages between different elements of the network taking part in the communication. In addition to establishing basic calls, telecommunications networks provide supplementary services. Along with the traditional supplementary services such as caller identification, call forwarding, announcements and call hold, new services have been added to IP networks thanks to the possibilities that this type of communication offers, allowing a very flexible combination despite the information nature be it voice, video or data.

In general, regardless of the type of telecommunications network, providing each new service requires a sequence of specific signaling messages so that the addition of a new service requires updating the program logic, i.e. the software of the network elements taking part in this communication.

Likewise, the configuration of these services is dependent on the equipment manufacturer, and therefore adaptations enabling interoperability are necessary.

These issues are particularly important in IP networks in which new services are continuously appearing.

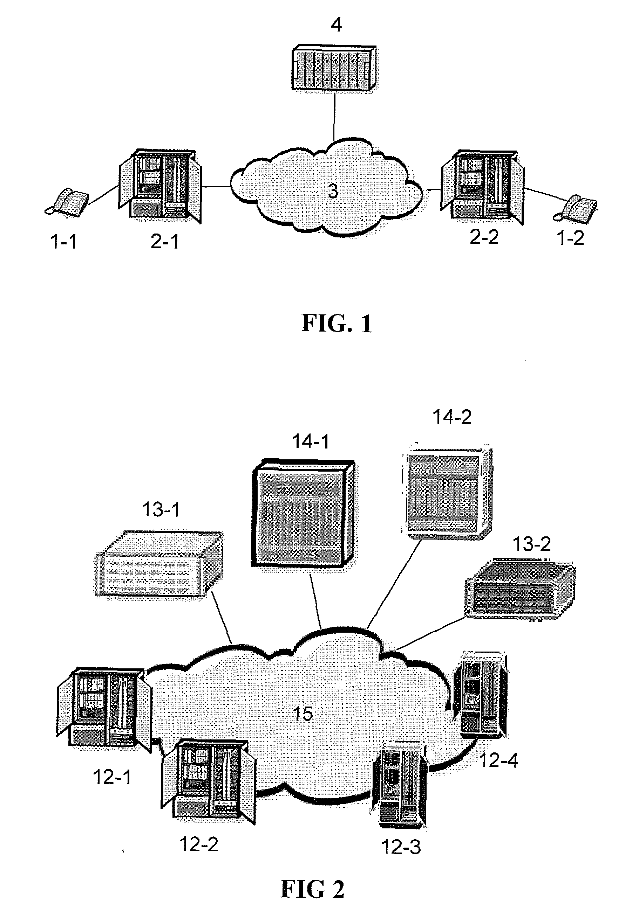

Figure 1 shows the foregoing. This figure shows a packet telecommunications network comprising access gateways 2-1, 2-2 controlled by call controller 4.

The gateways serve as connection elements between the final subscriber terminals 1-1, 1-2 and the packet network 3.

In the case of Figure 1, the terminals can be analog telephones, ISDN terminals, IP terminals or the like.

In a basic call scenario, when the subscriber picks up calling terminal 1-1 and dials the number of called terminal 1-2, calling gateway 2-1 notifies a controller 4. The controller, if the state of terminal 1-2 allows it, sends commands to both gateways, calling gateway 2-1 and called gateway 2-2, which allow communication to be established between both parties and therefore, between terminals 1-1 and 1-2.

In certain situations however, it is not possible to establish communication (for example, when the network is overloaded) and in some cases, the calling subscriber is informed of the situation by means of an announcement.

The signaling scenario of this supplementary service depends on the type of network and signaling and on where the announcements are stored. If they are stored in an announcement server, controller 4 will establish a call between this server and gateway 2-1. However, if the announcement is stored in the gateways, controller 4 sends a command to gateway 2-1 so that the correct announcement is applied. This is a specific command of this service. For example, in the Megaco protocol (ITU-T H.248.1), the command used to reproduce a fixed announcement contains the signals described in the packet "Generic Announcement Package" (ITU-T H.248.7).

The services which are represented in the present invention require the use of recordings, either their emission or their recording; for example, announcements, personalized call tones or other types of recorded tones, voice box messages, personalized message left on an answering machine or voice box messages.

The recordings can be stored in central servers or distributed in different elements of the network. For some services, it can even be of interest to combine centralized and distributed storage.

For the announcement service for example, it is suitable to store the most frequent announcements in the access nodes, while the rest are stored in a central server, thus reducing the traffic load in the network.

The distributed storage however has the drawback that the management can be different depending on the manufacturer of each equipment or needing adaptations when the operator requires unifying it.

Figure 2 represents an example in which in a VoIP telecommunications network 15, announcements are stored in a set of access gateways 12-i, in which i = 1,2,...,n. The gateways 12-1 and 12-2 are from a first manufacturer and gateways 12-3 or 12-4 from a second manufacturer. The gateways from the first manufacturer are managed with network manager 14-1, while the gateways from the second manufacturer are managed with network manager 14-2. Both management systems may need adaptations in order to work together or to be compatible.

In the example in Figure 2, the storage of the announcements is distributed, therefore each of the gateways has a file with announcements stored therein. In the event that an announcement needs to be changed or added, the stored announcement files in all of the gateways will have to be replaced.

Said task is initiated by network manager 14-1 which generates and sends a management message to each of the gateways 12-1 and 12-2 of the first manufacturer. Likewise, network manager 14-2 sends an analog message to gateways 12-3 and 12-4 of the second manufacturer. As a consequence of these management messages, access gateways 12-1 and 12-2 generate and send download requests of a complete file to the file server 13-1 of the first manufacturer, which will substitute the stored announcement file. Gateways 12-2 and 12-3 carry out an analog request to the file server 13-2 of the second manufacturer. Based on the resource availability of the network 15, file servers 13-1 and 13-2 will deal with the requests according to their possibilities.

The previous example shows the diversity of processes for the configuration of a certain service when there is equipment from different manufacturers in the network. It is also possible that the different services require diverse processes even in the equipment of the same manufacturer.

In this context, the existing solution is not very efficient and presents disadvantages in terms of scalability.

### CHARACTERIZATION OF THE INVENTION

The present invention looks for to solve or reduce one or more of the drawbacks set forth above by means of a process for providing telecommunication services using simple signaling methods, as claimed in claim 1. Embodiments of the invention are established in the dependent claims.

One object of the invention is to provide different services using a sequence of simple control or signaling messages and common to all these services.

Yet another object of the invention is to provide a less complex configuration process for configuring different services and common to all the services.

Still another object of the invention is that the sequence of control or signaling for providing different services is the same that is used to configure these services.

Yet another object of the invention is that the sequence of control or signaling for providing and configuring different services reuses the control or signaling processes for establishing a basic call.

Another object of the invention is to assure the interworking between equipment of different manufacturers in order to provide services.

Still another object of the invention is to develop a simpler process for providing services which in turn provides better reliability and scalability of the telecommunications network architecture.

Another object of the invention is to be able to easily introduce new services or variants without requiring equipment adaptations at the physical development level, hardware, as well as at the level of new logistical applications development, software, which are executed by the hardware thereof thanks to a common and less complex process.

### BRIEF DESCRIPTION OF THE DRAWINGS

A more detailed explanation of the invention is given in the following description based on the attached figures in which:
Figure 1 shows a packet telecommunications network according to the state of the art,
Figure 2 shows an example of the service configuration according to a second state of the art, and
Figure 3 illustrates an embodiment example according to the invention.

### DESCRIPTION OF THE INVENTION

In the process of establishing communication, as has been described previously in Figure 1, the calling subscriber 1-1 and the called subscriber 1-2 are identified by means of predetermined parameters the name and structure of which depend on the type of signaling.

For example with this aim, termination IDs are used in the Megaco protocol (ITU-T H.248), whereas URI, Unique Resource Identifiers, are used in SIP, Session Initiation Protocol.

For example, Megaco defines the concept of termination as a logical entity in a Media Gateway, which transmits or receives multimedia or control flows. It further distinguishes between physical terminations which correspond with permanent elements of the media gateways, such as a TDM channel in a trunk link or a subscriber port in an access gateway, and ephemeral terminations which are sources and sinks of the RTP, Real-Time Protocol, flows and the existence of which lasts as long as the communication lasts.

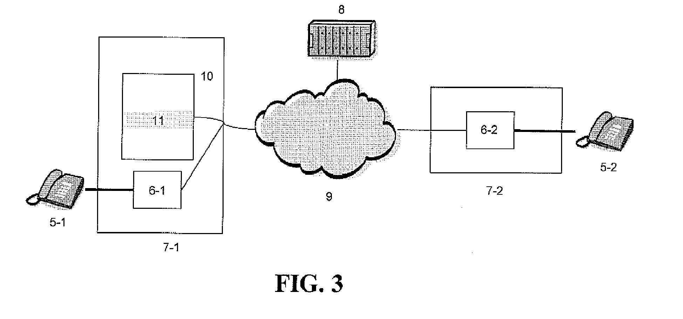

Taking as an example the scheme of Figure 1 and using Figure 3 as a base, a description of the invention will be given in which a new entity is defined that will be referred to hereinafter as memory termination by analogy with the nomenclature used en Megaco.

In the example described in Figure 1, the information flows between the subscriber ports, physical terminations in the Megaco nomenclature. Similarly, a memory termination is also an information source and sink, but its physical correspondence is not a subscriber port, but rather an identified memory area in an access gateway or in another network element.

In Figure 3, a first gateway 7-1 comprises memory terminations. Each memory termination does not physically correspond with a customer port of the gateway 7-1, but rather with an identified area of memory 10 of the corresponding access gateway 7-1. Area 11 of memory 10 represents the area used for a memory termination.

Returning now to Figure 1, the information flows between the corresponding subscriber ports of the first gateway 2-1 and the second gateway 2-2, respectively, or their corresponding physically terminations according to the Megaco nomenclature.

Similarly, a memory termination stores predetermined information. In the case of announcements for example, each gateway 7-1, 7-2 comprises a memory termination for each announcement.

From the signaling point of view, there is no difference between memory terminations 11 and physical terminations, using the Megaco terminology.

Each termination receives a different identity in the signaling or control messages. For example, the one corresponding to the first subscriber 5-1 can be identified by means of identity P1, the one for the second subscriber 5-2 can be identified by means of identity P2 and the memory termination 11, can be identified by means of identity M1.

Therefore, in order to transmit the stored information in memory terminal 11 towards the first subscriber 5-1 for example, it is sufficient to establish a basic call between the terminations corresponding to identities P1 and M1.

Returning now to the example of announcement services, and as it is illustrated in Figure 3, the first subscriber is connected to packet network 9 through his/her terminal 5-1 and the first gateway 7-1. The second subscriber is in turn connected to the same network 9 through his/her terminal 5-2 and the second gateway 7-2.

The first and second terminal 5-1, 5-2 are associated to a first subscriber port 6-1 and a second subscriber port 6-2, respectively, in the first gateway 7-1 and the second gateway 7-2, respectively.

The calling subscriber 5-1 picks up the phone and dials the number of the called subscriber 5-2, initiating an exchange of signaling messages between the first gateway 7-1 and a call controller 8 identifying the destination by the telephone number, the URI or another similar identifier.

Controller 8 has means for knowing the state of the subscriber ports of each access gateway 7-1, 7-2, for example, it establishes that called terminal 5-2 is busy and cannot receive a new call.

Due to the busy state of the called terminal, controller 8 generates and sends signaling messages to the first gateway 7-1 to establish communication between the termination P1 of calling subscriber 5-1 and the termination M1 of memory termination 11 housed in the first gateway 7-1, and not between termination P1 and termination P2 of called subscriber 5-2.

In the establishment messages, controller 8 indicates the direction in which the information has to flow. This is common in basic call signaling, in which it is indicated to each termination if it can receive, transmit or receive and transmit information.

In the case of the present example, controller 8 indicates to gateway 7-1 that termination P1, corresponding to subscriber 5-1, can only receive information, whereas termination M1, corresponding to the memory termination, can only transmit.

Once the communication has been established between terminations P1 and M1 as described, the first gateway 7-1 establishes a one-way communication path within the same gateway between memory termination 11 and subscriber port 6-1, corresponding to subscriber 5-1, with which the stored information is transmitted from memory termination 11 towards subscriber 5-1.

As it has been shown, it is possible to provide supplementary services without the need for introducing new control or signaling messages.

This is a great advantage over the current systems in which the inclusion of a new service almost always requires that new signaling messages between existing equipment be defined and/or that specialized equipment and processes be designed; this implies a discussion, acceptation, development, updating and testing process for the manufacturers of all equipment involved.

Regarding the configuration of the services, the invention simplifies the process.

When the network includes equipment from different manufacturers or from the same manufacturer but with different management systems, the configuration of the services that require distributed information storage is complex, as previously seen in Figure 2.

With the present invention and returning to Figure 3, to record new information in memory termination 11 for example, by means of controller 8 a basic call is established between one point of network 9; said point of the network could at the same time be a memory termination containing the new announcement and memory termination 11 in gateway 7-1. In the establishment message, controller 8 indicates in this case that the direction of information is towards termination 11, which stores the received information when communication is established.

The embodiments and examples set forth in this specification are presented as the best explanation of the present invention and its practical application to thus allow persons skilled in the art to put into practice and use the invention. The description as set forth is not intended to be exhaustive or to limit the invention to the specific described embodiment.

## Claims

1. A process for managing and providing diverse services in a packet telecommunications network (9), **characterized in that** the process comprises the step of using signaling or control messages in which memory areas (11) identified as memory ports or terminations are adapted to be treated as subscriber ports (6-1, 6-2).

2. A process according to claim 1, **characterized in that** the process further comprises the step of establishing communications between a memory termination that is configured as an identified memory area in telecommunications equipment and at least one subscriber port or at least another memory termination, by means of simple control or signaling messages, substantially similar to those used to establish communication between at least two subscriber ports.

3. A process according to claim 2, **characterized in that** the process further comprises assigning identities in order to unequivocally characterize memory terminals, to command establishing communication between memory terminals, between a memory terminal and any other terminal or terminals of the packet telecommunications network.

4. A process according to claim 3, **characterized in that** the process further comprises the ordering of reception and storage of information in the memory termination.

5. A process according to claim 4, **characterized in that** the process further comprises the transmission of information stored in the memory termination.

6. Telecommunications equipment connected to a packet telecommunications network (9) that can be a multimedia communications source or sink, **characterized in that** it comprises at least one memory termination according to claims 1 and 2.

7. Equipment according to claim 6, **characterized in that** the telecommunications equipment can be a media gateway, IP telephones, personal computers or media servers.

8. Equipment according to claim 6, **characterized in that** the a first gateway (7-1) establishes a one-way communication path within the same first gateway between memory termination (11) and the first subscriber port (6-1) corresponding with the first subscriber (5-1) in order to transmit stored information from memory terminal (11) to the first subscriber (5-1).
